# EUROPÄISCHE PATENTANMELDUNG

(11) **EP 0 959 267 A1**
(43) Veröffentlichungstag der Anmeldung: **24.11.1999**
(21) Anmeldenummer: 98108999.8
(22) Anmeldetag: 18.05.1998
(51) Int. Cl.: F16H 3/14

(54) **Einrichtung zum sequentiellen Schalten eines Geschwindigkeitswechselgetriebes in Kraftfahrzeugen**

(71) Anmelder: Wibmer, Richard, 6020 Innsbruck (AT)
(72) Erfinder: Wibmer, Richard, 6020 Innsbruck (AT)
(74) Vertreter: Torggler, Paul Norbert

(57) **Zusammenfassung**

Eine Einrichtung zum sequentiellen Schalten eines Geschwindigkeitswechselgetriebes weist einen Ganghebel (2), der in einer einzigen Ebene vor und zurück bewegbar ist, ein entlang einer ein- oder mehrfachen H-Linie bewegbares Schaltstück (3), und einen zwischen dem Ganghebel (2) und dem Schaltstück (3) angeordneten Bewegungswandler (4) auf, der die lineare Bewegung des Ganghebels (2) mechanisch in die gewinkelte Bewegung des Schaltstückes (3) umwandelt.

## Beschreibung

Die Erfindung betrifft eine Einrichtung zum sequentiellen Schalten eines Geschwindigkeitswechselgetriebes in Kraftfahrzeugen.

Von Hand zu schaltende Getriebe in Kraftfahrzeugen weisen im allgemeinen einen in einem Kugel- oder Kreuzgelenk gelagerten Ganghebel auf, der aufgrund einer Kulissenführung innerhalb und zwischen zueinander paralleler Spuren bewegbar ist. Üblicherweise wird hierfür die Bezeichnung H-förmige Kulisse oder auch H-Schaltung verwendet, auch dann, wenn ein Doppel- oder Mehrfach-H, also drei oder vier parallele Spuren ausgebildet sind. In jeder Spur kann zwischen zwei Gängen geschaltet werden, beispielsweise zwischen erstem und zweitem, drittem und viertem, fünftem und Rückwärtsgang, wobei vor der Schaltung des Rückwärtsgangs häufig eine Sperre aufgehoben werden muß. Diese Gangschaltungen weisen in jedem Fall ein hier als Schaltstück bezeichnetes Element auf das mit dem Ganghebel direkt oder indirekt verbunden ist und je nach Verbindungsstelle und Verbindungsort mit dem Ganghebel eine kongruente oder zentrisch-symmetrische H-Bewegung ausübt. Das Schaltstück verschiebt sich in jeder Spur der H-Linie vor und zurück und bewegt sich für den Wechsel zwischen den Spuren quer, wobei dies durch eine Querverschiebung, bevorzugt aber durch eine Verschwenkung um eine Achse erfolgen kann, die parallel zur Verschieberichtung liegt. Der Schaltbewegungsablauf eines H-geführten Ganghebels, beispielsweise vom ersten in den dritten, vierten oder fünften Gang, ist verhältnismäßig kompliziert und umfaßt zumindest eine zweifach abgewinkelte Bewegung, da die Schaltspur gewechselt werden muß. Obwohl das Schalten des Getriebes dem Autofahrer im allgemeinen keine Probleme bereitet, erfordert es vor allem für den Fahranfänger Konzentration, den jeweils richtigen Gang einzulegen, wodurch er vom Verkehrsgeschehen abgelenkt wird, bzw. erfordert einen gewissen Zeitaufwand, der sich in der Summe vor allem bei motorsportlicher Fahrweise zeitlich auswirken kann.

In einer sequentiellen Schaltung wird der Ganghebel ausschließlich in einer Ebene hin- und her- bzw. vor- und zurückbewegt, wobei die Gänge der Reihe nach hinauf oder hinunter geschaltet werden. Sequentielle Schaltungen sind bei einspurigen Fahrzeugen üblich, deren Getriebeaufbau auf die sequentielle Schaltweise abgestimmt ist. Weiters sind sequentiell schaltbare Getriebe auch für den Automobilsport entwickelt worden, jedoch sind dies jeweils aufwendige, teure Sonderausführungen, die für einen generellen Einsatz in Kraftfahrzeugen nicht in Frage kommen.

Versuche, Getriebe in Kraftfahrzeugen sequentiell zu schalten, sind bereits bekannt geworden, jedoch sind auch hier jeweils Adaptierungen in den Schaltgestängen oder Einschränkungen auf bestimmte Getriebetypen erfolgt. So zeigt beispielsweise die DE-C 943742 eine Schalteinrichtung mit einem in einer Ebene bewegbaren Ganghebel, der über ein Schrittschaltwerk eine Schaltwalze verdreht. Die Getriebeschaltvorrichtung umfaßt drei parallel zueinander geführte verschiebbare Schaltstangen, die mit nicht geradlinige Abschnitte aufweisenden Umfangsnuten der Schaltwerke zusammenwirken und jeweils einem Gangpaar zugehören. Über die Schaltwalze sind somit eine Verschiebung in jeder Spur der H-Form erreicht, wobei aber ein Wechsel zwischen den Spuren nicht vorgesehen ist.

Auch die Schalteinrichtungen nach FR-A 27 18 817 und der WO-A 96/23995 weisen eine von einem Ganghebel sequentiell verdrehbare Schaltwalze mit zwei Umfangsnuten auf, die zwei Schaltstangen verschieben, wobei über die eine Schaltstange das Gangpaar gewählt und über die zweite die Gänge innerhalb jedes Paares betätigt werden kann.

Die in der EP-A 616 153 beschriebene Schaltvorrichtung umfaßt für die Übertragung der Ganghebelbewegung zum Getriebe zwei Seilzüge, wobei auch hier über einen Seilzug das Gangpaar gewählt wird und über den zweiten Seilzug die Gänge innerhalb jedes Paares betätigt werden. Für die Bewegung des Seilzuges zum Schalten der Gänge innerhalb jeden Paares wird nicht eine Schaltwalze verdreht, sondern ein Steuerkulissenpaar alternierend geschwenkt. Der zweite Seilzug für die Gangpaarwahl wird von einem Schrittschaltwerk und einer Steuerscheibe bewegt.

Die Erfindung schafft nun eine Schalteinrichtung, die jede bekannte, vorhandene H-Schaltung in eine sequentielle Schaltung verändert, indem dem die H-Bewegung ausübenden Schaltstück ein Bewegungswandler zugeordnet ist, der von einem nur in einer Ebene bewegbaren Ganghebel betätigt wird, der insbesondere aus einer Neutralstellung verschwenkbar ist, in die er am Ende jedes Schaltvorganges unter der Wirkung einer Rückstellfeder zurückkehrt.

Eine erste Ausführung der Bewegungswandler sieht eine mittels des Ganghebels schrittweise verdrehbare parallel zur Schwenkachse des Ganghebels liegende Schaltwalze vor, in der zumindest ein Teil einer dreidimensionalen Kurvensteuerung ausgebildet ist. Insbesondere ist zwischen dem Ganghebel und der Schaltwalze ein aus der Neutralstellung beidseitig wirkendes Klinkenschaltwerk ausgebildet. Weiters ist bevorzugt eine Übersetzung vorgesehen, die den Schwenkwinkel des Ganghebels in einen größeren Drehwinkel der Schaltwalze ändert.

Die dreidimensionale Kurvensteuerung ist insbesondere in zwei zweidimensionale Kurvensteuerungen aufgeteilt, wobei zugeordnete Abtastelemente gemeinsam auf das Schaltstück einwirken. Die erste zweidimensionale Kurvensteuerung umfaßt bevorzugt eine Umfangs- bzw. Mantelnut in der Schaltwalze, die aus in Umfangsrichtung verlaufenden Abschnitten und dazwischenliegenden schrägen Übergangsabschnitten zusammengesetzt ist, wobei die schrägen Abschnitte das eingreifende erste Abtastelement in Richtung der Schaltwalzenachse verschieben. Dies verursacht die Querbewegung des Schaltstückes zwischen zueinander parallelen Schaltspuren der H-Linie.

Die zweite zweidimensionale Kurvensteuerung kann in einer ersten Ausführung durch einen vom Ganghebel umlaufend angetriebenen Kurbelzapfen und einen einen Führungsschlitz für den Kurbelzapfen aufweisenden senkrecht zum Führungsschlitz verschiebbaren Führungsrahmen gebildet sein, wobei die Verschiebung des Führungsrahmens die Bewegung des Schaltstückes innerhalb jeder der zueinander parallelen Spuren der H-Linie bewirkt. Der Kurbelzapfen ist bevorzugt an einer vom Ganghebel über eine entsprechende Übersetzung angetriebenen Scheibe vorgesehen, wobei jeder Schaltvorgang die Schwenkbewegung des Ganghebels in eine halbe Umdrehung des Kurbelzapfens übersetzt.

In einer zweiten Ausführung umfaßt die zweite zweidimensionale Kurvensteuerung eine Nut, die in zumindest einer der beiden Stirnseiten der Schaltwalze vorgesehen ist, deren Abstand zur Achse der Schaltwalze um die Länge der zueinander parallelen Spuren der H-Linie des Schaltstückes unterschiedlich ist, wobei der sich ändernde Achsabstand das eingreifende zweite Abtastelement verschiebt. Jede Stirnseitennut weist zur Schaltwalzenachse konzentrische Abschnitte sowie Abschnitte mit kleiner und mit größer werdendem Achsabstand auf wobei das Abtastelement während jedes Spurwechsels des Schaltstückes einen konzentrischen Abschnitt durchläuft. Eine Scheibe mit einer derartigen Nut kann aber auch zusätzlich zur Schaltwalze ähnlich dem vorstehend erwähnten Kurbelapfen vorgesehen und angetrieben sein.

Die dreidimensionale Kurvensteuerung kann in einer weiteren Ausführung auch eine unterschiedlich tief in die Schaltwalze eingearbeitete Nut, die entweder am Umfang oder in einer Stirnseite vorgesehen sein kann, sowie ein einziges Abtastelement aufweisen, das in beide Richtungen ausgelenkt wird. Bevorzugt sind in dieser Ausführung zwei derartige Nuten am Umfang oder in den Stirnseiten einander gegenüberliegend in der Schaltwalze vorgesehen, wobei die Abtastelemente miteinander gekoppelt sind und einander gegenseitig führen.

Das Schaltstück steht bevorzugt rechtwinklig von einer Schaltstange ab, die um ihre Längsachse schwenkbar und um die Länge der zueinander parallelen Spuren der H-Linie längsverschiebbar ist. Anstelle der Verschwenkung kann auch eine Querverschiebung erfolgen.

Die erfindungsgemäße Einrichtung ist insbesondere so ausgebildet und in einem Gehäuse angeordnet, daß sie eine anstelle eines herkömmlichen Ganghebels montierbare Einheit darstellt.

Nachstehend wird nun die Erfindung an Hand der Figuren der beiliegenden Zeichnungen näher beschrieben, ohne darauf beschränkt zu sein.

Es zeigen:
- Fig. 1 und 2: entgegengesetzte Schrägansichten einer ersten Ausführung eines Bewegungwandlers in der Position des zweiten Ganges,
- Fig. 3: die Leerlaufposition des Bewegungswandlers,
- Fig. 4: die Rückwärtsgangposition,
- Fig. 5: die Position des ersten Ganges,

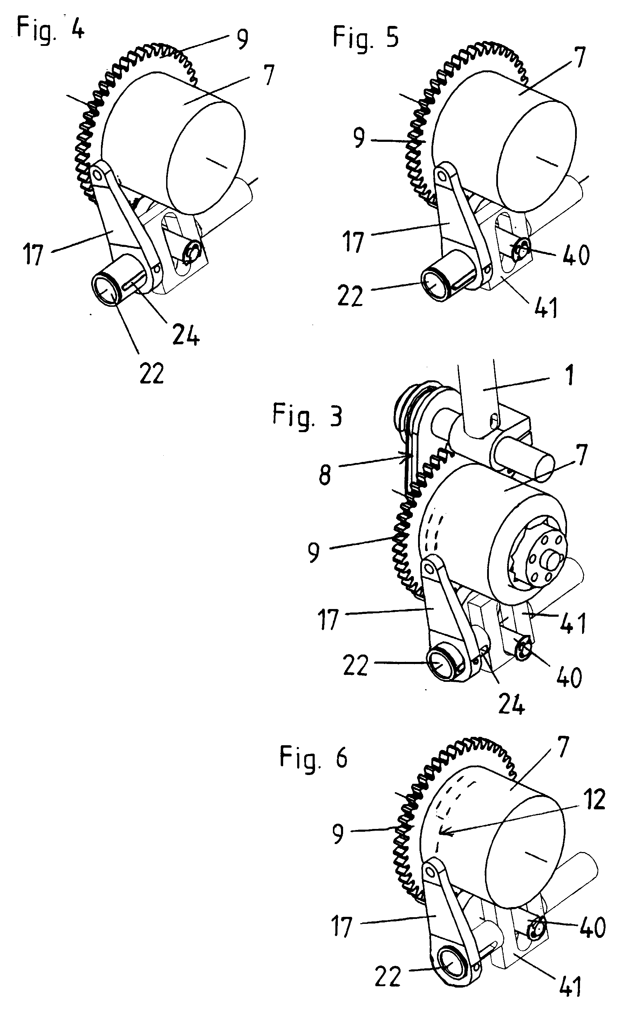

- Fig. 5: die Position des zweiten Ganges,
- Fig. 6: die Position des zweiten Ganges,

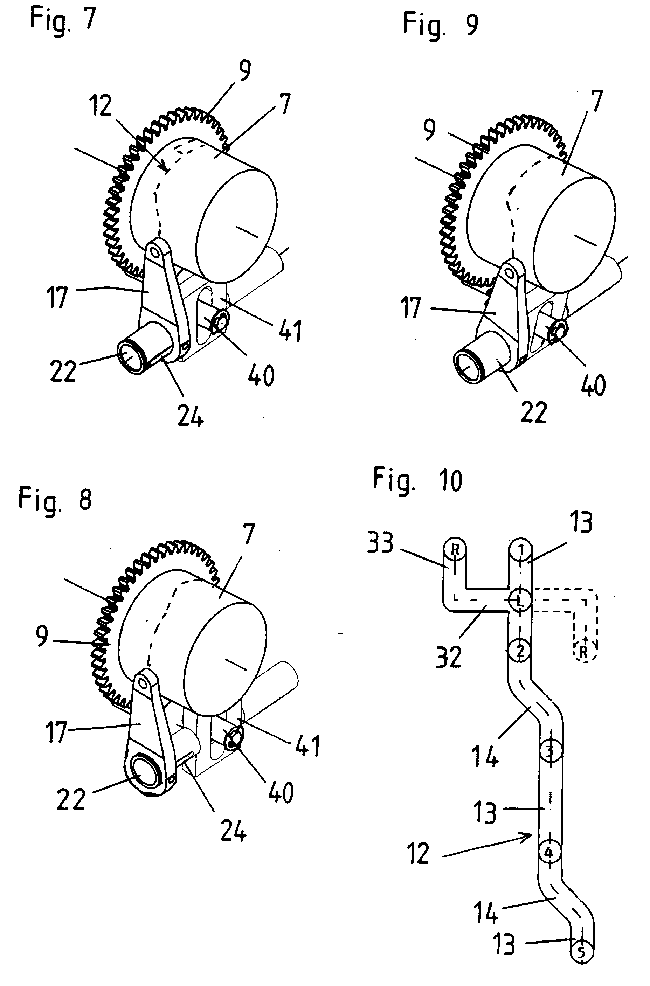

- Fig. 7: die Position des dritten Ganges,
- Fig. 8: die Position des vierten Ganges,
- Fig. 9: die Position des fünften Ganges,
- Fig. 10: eine Abwicklung der Umfangsnut,

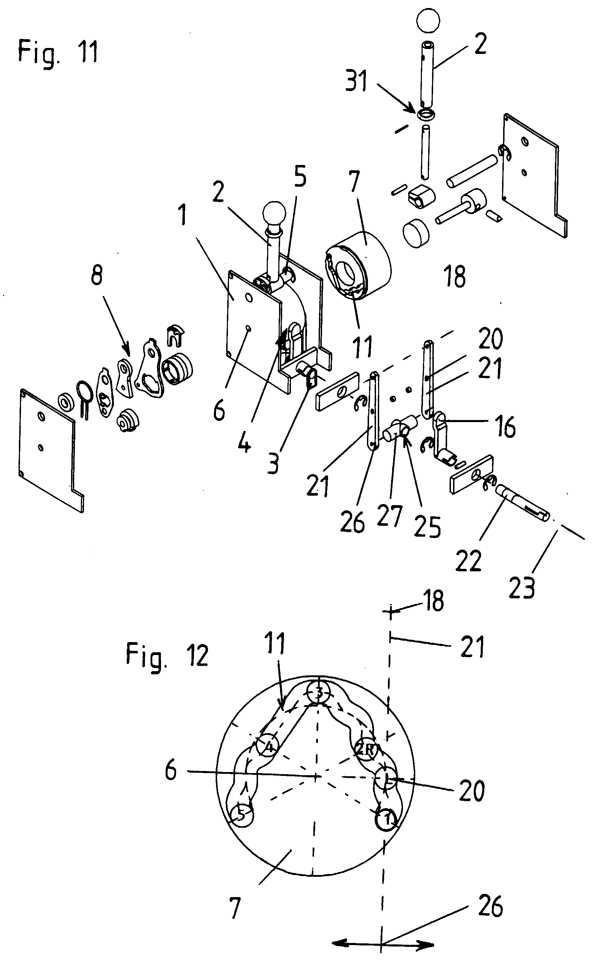

- Fig. 11: eine Explosionsdarstellung einer zweiten Ausführung eines Bewegungswandlers, und
- Fig. 12: eine Ansicht der Stirnseiten des zweiten Ausführungsbeispiels.

Eine Einrichtung zum sequentiellen Schalten eines eine H-Schaltung aufweisenden Geschwindigkeitswechselgetriebes in einem Kraftfahrzeug weist einen Bewegungswandler 4 auf, durch den die Hin- und Herbewegung eines Ganghebels 2 in die benötigte, mehrfach gewinkelte, der ein- oder mehrfachen H-Linie folgenden Bewegung eines Schaltstückes 3 verändert wird. Der Bewegungswandler 4 ist in einem in Fig. 11 schematisch angedeuteten Gehäuse 1 angeordnet, sodaß die sequentielle Schalteinrichtung anstelle der üblichen Gangschaltung 4 auf der Mittelkonsole od. dgl. des Fahrzeuges montierbar ist.

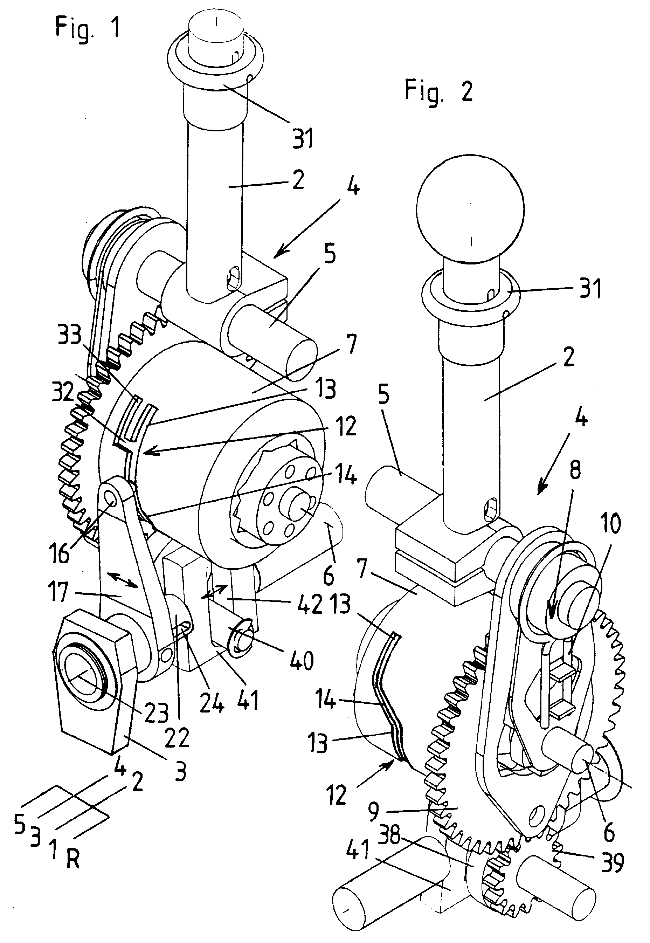

In der ersten Ausführung gemäß den Fig. 1 und 2 ist der Bewegungswandler 4 in Schrägansicht von einander entgegengesetzten Seiten gezeigt. Der Ganghebel 2, dem ein getrennt zu betätigendes Sperrelement 31 für den Rückwärtsgang, im dargestellten Ausführungsbeispiel eine Schiebemuffe, zugeordnet ist, ist um eine im Gehäuse 1 gelagerte Querachse 5 aus einer neutralen Mittelstellung heraus ausschließlich in einer Ebene hin- und herschwenkbar, wobei die Schwenkbewegung über ein Schrittschaltwerk 8, das nach beiden Seiten wirksam ist, eine Schaltwalze 7 um ihre Achse 6 schrittweise verdreht. Eine Rückstellfeder 10 stellt den Ganghebel 2 jeweils in die neutrale Mittelstellung zurück, sodaß das Hochschalten vom ersten in den fünften Gang ausschließlich eine sich wiederholende Bewegung des Ganghebels 2 in eine erste Richtung und das Herunterschalten eine sich wiederholende Gegenbewegung erfordert. Im Schrittschaltwerk 8 ist vorzugsweise eine Ubersetzung vorgesehen, die den relativ kleinen Schwenkwinkel des Ganghebels 2 von beispielsweise 30° in einen Drehwinkel von beispielsweise 60° der Schaltwalze 7 verändert. Die Schaltwalze 7 weist eine Umfangs- bzw. Mantelnut 12 auf, die sich um ein der Anzahl der zu schaltenden Gänge entsprechendes Vielfaches des Schrittschaltdrehwinkels der Schaltwalze 7 erstreckt. Für fünf Gänge und dem erwähnten Drehwinkel von 60° erstreckt sich die Umfangsnut 12 daher über einen Winkel von etwa über 240°. Die Umfangsnut 12 weist in Radialebenen der Schaltwalze 7 liegende Abschnitte 13 und schräg verlaufende Verbindungsabschnitte 14 auf, und ein erstes Abtastelement 16, das an einem Schwenkhebel 17 angeordnet ist, greift in die Umfangsnut 12 ein. Bei Drehung der Schaltwalze 7 bewirken daher die schräg verlaufenden Verbindungsabschnitte 14 eine Bewegung des Schwenkhebels 17, während die radialen Abschnitte 13 keine Bewegung bewirken.

Die Schaltwalze 7 ist mit einem Stirnzahnkranz 9 versehen, der in den Zahnkranz 39 eine Kurbelscheibe 38 eingreift, die ebenfalls im Gehäuse 1 gelagert ist und einen Kurbelzapfen 40 trägt. Die Verzahnung der Zahnkränze 9 und 39 sind so gewählt, daß der Kurbelzapfen 40 während einer Schaltbewegung des Ganghebels 2 um 180° verdreht wird und während der Schaltbewegung um weitere 180° weiterverdreht wird. Beträgt der Schrittschaltdrehwinkel der Schaltwalze 60°, so ist das Verhältnis der Zahnkränze 9 und 39 eins zu drei.

Der Kurbelzapfen 40 greift in einen Führungsschlitz 42 eines senkrecht zum Führungsschlitz 42 verschiebbaren Führungsrahmens 41 ein, dessen Verschieberichtung senkrecht zur Schwenkebene des Schwenkhebels 17 liegt. Am Führungsrahmen 41 ist eine Schaltstange 22 um ihre Längsachse 23 drehbar gelagert, die sich in der Verschieberichtung des Führungsrahmens 41 erstreckt, und auf der der Schwenkhebel 17 verdrehtfest, jedoch verschieblich angeordnet ist. Die Drehung des Kurbelzapfens 40 wird also in eine Verschiebung der Schaltstange 22 umgesetzt, die zusätzlich vom Schwenkhebel 17 um ihre Achse 23 hin und her verdreht wird.

Der Bewegungswandler 4 umfaßt somit eine dreidimensionale Kurvensteuerung, die in zwei zweidimensionale Kurvensteuerungen unterteilt ist, deren Abtastelemente bzw. Ausgangselemente 17, 41 gemeinsam auf das Schaltstück 3 einwirken, wobei die die Umfangsnut 12 und den Schwenkhebel 17 umfassende erste zweidimensionale Kurvensteuerung die Schaltstange 22 verdreht und die Querbewegung des von der Schaltstange 22 abstehenden Schaltstückes 3 erzeugt, und wobei die den Kurbelzapfen 40 und den Führungarahmen 41 umfassende zweite zweidimensionale Kurvensteuerung die Längsbewegung der Schaltstange 22 und des abstehenden Schaltstücks 31 erzeugt.

Das dem Wechselgetriebe zugeordnete Schaltstück 3 folgt somit einer H- oder Doppel-H-Linie, wobei die Verschiebung in den zueinander parallelen Spuren des H über den Kurbelzapfen 40 und der Wechsel zwischen den Spuren des H über die Umfangsnut 12 gesteuert werden.

Die einzelnen Schaltstellungen sind in den Fig. 3 bis 9 gezeigt, wobei Fig. 3 die Leerlaufposition zeigt, in der der Schwenkhebel 17 eine mittlere Lage auf der Schaltstange 22 einnimmt, in der die Schiebeführungsnut 24 beidseitig des Schwenkhebels sichtbar ist. Ausgehend von Fig. 3 kann nun durch Betätigung des Sperrelementes 31 die in Fig. 1 gezeigte Quernut 32 freigegeben und das Abtastelement 16 in der Quernut 32 bewegt werden (Fig. 10), worauf durch die Drehung der Schaltwalze 7 das Abtastelement 16 in den den Rückwärtsgang zugeordneten Abschnitt 33 der Umfangsnut 12 bewegt wird (Fig. 4). Wenn aus dem Leerlauf in den ersten Gang geschaltet wird, so gleitet das Abtastelement 16 ans Ende des ersten Abschnitts 13 der Umfangsnut 12 (Fig. 5), wobei sowohl in der Position für den Rückwärtsgang nach Fig. 4 als auch in der Position für den ersten Gang nach Fig. 5 die Schaltstange 22 durch den Kurbelzapfen 40 in die vorderste Lage verschoben ist.

Beim Schalten vom ersten in den zweiten Gang wird die Schaltwalze 7 verdreht und das Abtastelement 16 gleitet entlang des ersten Abschnitts 13 der Umfangsnut 12 bis in dessen zweiten Endbereich, wobei die Kurbelscheibe 38 um 180° verdreht wird und der Kurbelzapfen 40 die Schaltstange 22 in die hinterste Lage zurückzieht (Fig. 6). Beim Weiterschalten in den dritten Gang (Fig. 7) wird der erste schräge Verbindungsabschnitt 14 der Umfangsnut 12 wirksam, der den Schwenkhebel 17 auslenkt und die Schaltstange 22 um ihre Längsachse 23 verdreht. Das Schaltstück 3 wechselt aus der Spur für den ersten und zweiten Gang in die Spur für den dritten und vierten Gang, wie dies vor allem aus Fig. 10 ersichtlich ist, und das Abtastelement 16 wandert den zweiten Abschnitt 13 der Umfangsnut 12 entlang, wobei die Schaltstange 22 vom wiederum um 180° weiterbewegten Kurbelzapfen 40 wieder in die vorderste Lage verschoben wird, und die Position für den dritten Gang erreicht ist (Fig. 7). Wird in den vierten Gang geschalten, so dreht sich die Schaltwalze 7 weiter, und das Abtastelement 16 bleibt unverändert, da es den radialen zweiten Abschnitt 13 der Umfangsnut 12 entlang wandert. Hingegen verdreht sich die Kurbelscheibe 38 um weitere 180° und der Kurbelzapfen 40 zieht den Führungsrahmen 41 und die Schaltstange 22 wieder in die hinterste Stellung zurück (Fig. 8). In Fig. 9 ist die Stellung des fünften Gangs gezeigt. Aus dem vierten Gang wird die Schaltwalze 7 vom Ganghebel 2 wieder weitergedreht und der Schwenkhebel 17 vom zweiten schrägen Verbindungsabschnitt 14 weiter verschwenkt, sodaß sich die Schaltstange 22 verdreht und das Schaltstück 3 in die nächste parallele Spur wechselt, in der durch die Weiterdrehung der Kurbelscheibe 38 um 180° die Schaltstange 22 wieder nach vorne geschoben wird.

In Fig. 10 ist strichliert auch eine Variante für die Anordnung für den Rückwärtsgang dargestellt, wobei der zugeordnete Abschnitt 33 mit dem letzten radialen Abschnitt 13 für den fünften Gang fluchtet.

Fig. 11 und 12 zeigen eine zweite Ausführung, in der die erste zweidimensionale Kurvensteuerung ähnlich wie in Fig. 1 bis 9 eine Umfangsnut 12 und ein Abtastelement 16 umfaßt, mittels der die Schaltstange 22 um ihre Achse 23 zwischen den Spuren bzw. Gangpaaren verschwenkt wird, sodaß die Abwicklung der Umfangsnut 12 der Darstellung nach Fig. 10 entspricht. Die zweite zweidimensionale Kurvensteuerung wird in dieser Ausführung jedoch nicht über eine Kurbeischeibe sondern über eine Nut 11 in der Stimseite der Schaltwalze 7 bzw. ein gleichartiges Nutenpaar in beiden Stirnseiten verwirklicht, in die je ein Abtastelement 20 eingreift, das an einem um eine zur Achse 6 der Schaltwalze 7 parallele Achse 18 schwenkbaren Schwenkhebel 21 angeordnet ist. Fig. 12 zeigt den Verlauf der Nut 11, deren Abstand von der Achse 6 der Schaltwalze 7 unterschiedlich ist, wobei die Abstandsänderung die Vor- und Zurückverschiebung der Schaltstange 22 bewirkt.

In Fig. 12 ist die Leerlaufposition L dargestellt, aus der bei Drehung der Schaltwalze 7 der Schwenkhebel 21 nach vorne bewegt wird, wenn die Nut 11 sich dem Umfang der Schaltwalze 7 nähert (Gänge 1, 3 und 5), und nach hinten bewegt wird, wenn die Nut sich der Achse 6 nähert (Gang 2, 4 und Rückwärtsgang). Die Verschiebelänge für die Schaltstange 22 wird durch eine Übersetzung erreicht, die sich aus den verschieden langen Hebelarmen des Schwenkhebels 21 ergibt (Verhältnis der Abstände der Achse 18 zum Abtastelement 20 und zum Gelenk 26, das den Schwenkhebel 21 mit einem auf der Schaltstange 22 drehbar gelagerten, axial festgelegten Mitnehmer 27 verbindet).

Die Unterteilung der dreidimensionalen Kurvensteuerung in zwei zweidimensionale Kurvensteuerungen kann unterbleiben, wenn beispielsweise in beiden Stirnseiten einer Schaltwalze Nuten vorgesehen sind, die in der Anordnung gemäß Fig. 12 die Verschiebung der Schaltstange 22 bewirken, und unterschiedliche Tiefen aufweisen, wobei einem tieferen Bereich in einer Stirnseite ein weniger tiefer Bereich in der zweiten Stirnseite gegenüberliegt. Die beiden in die Nuten eingreifenden Abtastelemente sind miteinander gekoppelt, wobei deren Koppelelement sich parallel zur Schaltwalze 7 verschiebt. Diese Bewegung wird dann entweder direkt auf die Schaltstange 22 übertragen, die dadurch zwischen den Spuren parallel verschoben wird, oder in eine Verdrehung der Schaltstange 22 übersetzt, sodaß sie um ihre Längsachse 23 hin- und hergeschwenkt wird. In dieser Ausführung ist keine Umfangs- oder Mantelnut 12 erforderlich.

Ebenso können auch ein Paar von unterschiedlich tiefen Umfangs- bzw. Mantelnuten 12 in der Schaltwalze 7 ausgebildet sein, wobei die Tiefenänderungen in den Nutenabschnitten über zwei gekoppelte Abtastelemente die Längsverschiebung der Schaltstange 22 bewirken.

## Patentansprüche

1. Einrichtung zum sequentiellen Schalten eines Geschwindigkeitswechselgetriebes, mit einem Ganghebel (2), der in einer einzigen Ebene vor und zurück bewegbar ist, mit einem entlang einer ein- oder mehrfachen H-Linie bewegbaren Schaltstück (3), und mit einem zwischen dem Ganghebel (2) und dem Schaltstück (3) angeordneten Bewegungswandler (4), der die lineare Bewegung des Ganghebels (2) mechanisch in die gewinkelte Bewegung des Schaltstückes (3) umwandelt.

2. Einrichtung nach Anspruch 1, dadurch gekennzeichnet, daß der Ganghebel (2) bei jedem Schaltvorgang aus einer Neutralstellung verschwenkbar ist, in die er am Ende jedes Schaltvorganges unter der Wirkung einer Rückstellfeder zurückkehrt.

3. Einrichtung nach Anspruch 1 oder 2, dadurch gekennzeichnet, daß im Bewegungswandler (4) eine dreidimensionale Kurvensteuerung ausgebildet ist, die eine mit dem Schaltstück (3) verbundene Abtasteinrichtung aufweist.

4. Einrichtung nach Anspruch 3, dadurch gekennzeichnet, daß der Bewegungswandler (4) eine mittels des Ganghebels (2) schrittweise verdrehbare Schaltwalze (7) aufweist, deren Achse (6) parallel zur Schwenkachse des Ganghebels (1) liegt, und in der zumindest ein Teil der dreidimensionalen Kurvensteuerung ausgebildet ist.

5. Einrichtung nach Anspruch 3 oder 4, dadurch gekennzeichnet, daß die dreidimensionale Kurvensteuerung zwei voneinander getrennte zweidimensionale Kurvensteuerungen aufweist, die gemeinsam auf das Schaltstück (3) einwirken, wobei die erste Kurvensteuerung mit einem ersten Abtastelement (16) die Querbewegung des Schaltstücks (3) zwischen den zueinander parallelen Spuren und die zweite Kurvensteuerung mit einem zweiten Abtastelement (20) die Längsbewegung des Schaltstückes (3) innerhalb jedes der zueinander parallelen Spuren der H-Linie erzeugen.

6. Einrichtung nach Anspruch 5, dadurch gekennzeichnet, daß die erste zweidimensionale Kurvensteuerung in der Schaltwalze (7) eine Umfangsnut (12) umfaßt, die in Radialebenen liegende Abschnitte (13) und dazwischenliegende schräge Übergangsabschnitte (14) aufweist, wobei die Übergangsabschnitte (14) das eingreifende erste Abtastelement (16) in Richtung der Achse (6) der Schaltwalze (7) verschieben.

7. Einrichtung nach Anspruch 5, dadurch gekennzeichnet, daß die zweite zweidimensionale Kurvensteuerung einen vom schwenkenden Ganghebel (1) umlaufend angetriebenen Kurbelzapfen (40) umfaßt, der in einen Führungsschlitz (42) eines senkrecht zum Führungsschlitz (42) um die Länge der zueinander parallelen Spuren der H-Linie verschiebbaren Führungsrahmens (41) eingreift.

8. Einrichtung nach Anspruch 7, dadurch gekennzeichnet, daß jeder Schaltvorgang die Schwenkbewegung des Ganghebels (1) in eine halbe Umdrehung des Kurbelzapfens (40) übersetzt.

9. Einrichtung nach Anspruch 4 und 5, dadurch gekennzeichnet, daß die zweite zweidimensionale Kurvensteuerung eine Nut (11) ) in zumindest einer Stirnseite der Schaltwalze (7) aufweist, deren Abstand zur Achse (6) der Schaltwalze (7) um die Länge der zueinander parallelen Spuren der H-Linie unterschiedlich ist, wobei der sich ändernde Achsabstand das eingreifende zweite Abtastelement (20) verschiebt.

10. Einrichtung nach Anspruch 4, dadurch gekennzeichnet, daß die dreidimensionale Kurvensteuerung zumindest eine unterschiedlich tief in die Schaltwalze (7) eingreifende Nut und ein einziges mit dem Schaltstück (3) verbundenes Abtastelement aufweist.

11. Einrichtung nach Anspruch 10, dadurch gekennzeichnet, daß die unterschiedlich tiefe Nut am Umfang der Schaltwalze (7) vorgesehen ist, und in Radialebenen liegende Abschnitte (13) und dazwischenliegende schräge Übergangsabschnitte (14) aufweist.

12. Einrichtung nach Anspruch 10, dadurch gekennzeichnet, daß die unterschiedlich tiefe Nut in zumindest einer Stirnseite der Schaltwalze (7) vorgesehen ist, deren Abstand zur Achse (6) der Schaltwalze (7) um die Länge der zueinander parallelen Spuren der H-Linie unterschiedlich ist.

13. Einrichtung nach Anspruch 11 oder 12, dadurch gekennzeichnet, daß zwei unterschiedlich tiefe Nuten einander gegenüberliegend in der Schaltwalze (7) ausgebildet sind, in die miteinander gekoppelte Abtastelemente eingreifen, wobei das Koppelglied mit dem Schaltstück (3) verbunden ist.

14. Einrichtung nach einem der Ansprüche 5 bis 13, dadurch gekennzeichnet, daß das Schaltstück (3) an einer Schaltstange (22) angeordnet ist, die um ihre Längsachse schwenkbar und um die Länge der zueinander parallelen Spuren der H-Linie längsverschiebbar ist.

15. Einrichtung nach Anspruch 6 und 14, dadurch gekennzeichnet, daß das erste Abtastelement (16) an einem Schwenkhebel (17) angeordnet ist, und die Schaltstange (22) im Schwenkhebel (17) verdrehfest axial verschiebbar gelagert ist.

16. Einrichtung nach Anspruch 7 und 14, dadurch gekennzeichnet, daß die Schaltstange (22) am Führungsrahmen (41) des zweiten Abtastelementes (20) um ihre Längsachse drehbar gelagert ist.

17. Einrichtung nach Anspruch 9 und 14, dadurch gekennzeichnet, daß das zweite Abtastelement (20) an einem Schwenkhebel (21) angeordnet ist, der um eine parallel zur Achse (6) der Schaltwalze (7) liegende Achse (18) schwenkbar gelagert ist, und dessen freies Ende an einem Mitnehmer (27) angelenkt ist, der axial unverschiebbar auf der Schaltstange (22) drehbar gelagert ist.

18. Einrichtung nach Anspruch 17, dadurch gekennzeichnet, daß der Schwenkhebel (21) zwei unterschiedlich lange Hebelarme aufweist.

19. Einrichtung nach einem der Ansprüche 3 bis 19, dadurch gekennzeichnet, daß dem Ganghebel (2) ein Sperrelement (31) zugeordnet ist, dessen Betätigung einen Abschnitt der dreidimensionalen Kurvensteuerung freigibt, der dem Rückwärtsgang des Getriebes zugeordnet ist.

20. Einrichtung nach Anspruch 19, dadurch gekennzeichnet, daß der Abschnitt für den Rückwärtsgang zwischen den Abschnitten für den ersten und zweiten Gang abzweigt.

21. Einrichtung nach Anspruch 19 dadurch gekennzeichnet, daß der Abschnitt für den Rückwärtsgang am Ende der Kurvensteuerung an den Abschnitt für den ersten Gang anschließt.

22. Einrichtung nach einem der Ansprüche 1 bis 21 dadurch gekennzeichnet, daß die Einrichtung als anstelle eines herkömmlichen Ganghebels montierbare Einheit ausgebildet ist.
